# EUROPÄISCHE PATENTSCHRIFT

(11) **EP 3 984 831 B1**
(45) Veröffentlichungstag und Bekanntmachung des Hinweises auf die Patenterteilung: **15.05.2024**
(21) Anmeldenummer: 21201177.9
(22) Anmeldetag: 06.10.2021
(51) Int. Cl.: B60R 19/18, B60R 19/34

(54) **STOSSFÄNGERANORDNUNG FÜR EIN KRAFTFAHRZEUG**
BUMPER ASSEMBLY FOR A MOTOR VEHICLE
DISPOSITIF PARE-CHOCS POUR UN VÉHICULE AUTOMOBILE

(30) Priorität: 14.10.2020 DE 102020127056
(43) Veröffentlichungstag der Anmeldung: 20.04.2022
(73) Patentinhaber: Benteler Automobiltechnik GmbH, 33102 Paderborn (DE)
(72) Erfinder: Kalekar, Umesh, 33102 Paderborn (DE); Mollemeier, Elmar, 33129 Delbrück (DE); Paare, Mirko, 33106 Paderborn (DE); Schröter, Martin, 33102 Paderborn (DE)
(74) Vertreter: Osterhoff, Utz

(56) Entgegenhaltungen:
- EP-A1- 2 082 924
- WO-A1-02/30714
- WO-A1-2017/044035
- CN-U- 201 784 558
- DE-A1-102010 031 089
- DE-U1-202016 104 012
- FR-A2- 2 345 336

## Beschreibung

Die vorliegende Erfindung betrifft ein Kraftfahrzeug mit einer Stoßfängeranordnung gemäß den Merkmalen im Oberbegriff von Anspruch 1.

Aus dem Stand der Technik ist es bekannt, dass Kraftfahrzeuge front- bzw. endseitig Stoßfängeranordnungen aufweisen. Im Falle eines Fahrzeugcrashes bzw. eines Auffahrunfalls oder auch eines Anpralls an einen Gegenstand, werden durch eine solche Stoßfängeranordnung zwei Aufgaben erfüllt. Zum einen ist ein Querträger vorhanden. Der Querträger besitzt eine hinreichende Steifigkeit um zu verhindern, dass ein entsprechender Gegenstand oder ein Kraftfahrzeug zu stark in den Front- oder Endbereich eindringen würde. Mithin wird ein evtl. punktuelles Auftreffen, beispielsweise auf einen Pfahl, durch den Querträger auf einen Großteil der Kraftfahrzeugbreite übertragen.

Eine zweite Aufgabe, die durch eine Stoßfängeranordnung erfüllt wird, ist die Wandlung von Crashenergie in Umformabarbeit und dadurch eine entsprechende Verminderung der Aufprallenergie. Hierzu ist ein jeweiliger Querträger über Crashboxen an das Kraftfahrzeug gekoppelt. Die Crashboxen sind hierzu auf die Kraftfahrzeugquerrichtung bezogen, zwischen einem Mittelbereich und einem Endbereich des Querträgers angeordnet, mithin auf die Kraftfahrzeugbreite bezogen, jeweils zwischen einem Drittel und einem Viertel mit der Länge im äußeren Bereich des Querträgers angeordnet. Die Crashboxen werden dann zumeist an Längsträger des Kraftfahrzeugs gekoppelt. Im Falle eines Aufpralls falten sich die Crashboxen beispielsweise ziehharmonikaartig und wandeln somit Crashenergie in Umformarbeit um.

Beispielsweise ist aus der DE 20 2016 104 012 U1 ein Querträger bekannt, welcher ein Stoßfänger aufweist, der in einem Mittelbereich auf Kraftfahrzeugvertikalrichtung nach oben versetzt ist, um die Anforderung eine Bumper to Bumper-Crashes zu erfüllen. Die CN201784558U offenbart ein Kraftfahrzeug mit einer Stoßfängeranordnung nach dem Oberbegriff von Anspruch 1.

Aufgabe der vorliegenden Erfindung ist es, eine Stoßfängeranordnung bereitzustellen, die bei einem Offset-Crash ein verbessertes Crashverhalten aufweist.

Die vorliegende Erfindung wird mit einem Kraftfahrzeug mit einer Stoßfängeranordnung mit den Merkmalen im Anspruch 1 gelöst.

Vorteilhafte Ausgestaltungsvarianten sind in den abhängigen Ansprüchen beschrieben.

Die Stoßfängeranordnung für ein Kraftfahrzeug weist einen Querträger auf, welcher über bzw. mittels Crashboxen an ein Kraftfahrzeug koppelbar ist. Der Querträger ist als einseitiges offenes Hohlprofil ausgebildet, wobei die Öffnung des Hohlprofils in Kraftfahrzeuglängsrichtung orientiert von dem Kraftfahrzeug weg zeigt, in Hauptfahrtrichtung mithin nach vorne zeigend ausgebildet ist. Auch kann die Anordnung an einem Fahrzeugheck verbaut werden. In diesem Fall ist die Öffnung nach hinten zeigend ausgebildet. Erfindungsgemäß ist nunmehr vorgesehen, dass der Querträger in seinen Endabschnitten, auf die Vertikalrichtung bezogen, nach schräg unten orientiert verlaufend ausgebildet ist.

Dies bedeutet im Sinne der Erfindung, dass die Endabschnitte sich jeweils über ca. 10 bis 30 % der Gesamtlänge des Querträgers erstrecken. Nicht nur ein äußeres

Ende, sondern im Wesentlichen der gesamte Endabschnitt ist auf die Vertikalrichtung bezogen, nach schräg unten orientiert verlaufend ausgebildet. Das schräg nach unten orientiert, wird im Sinne der Erfindung durch ein schräges Abbiegen nach unten erreicht. Eine bevorzugte Ausführungsvariante sieht vor, dass das schräg nach unten orientiert verlaufend, durch einen S-förmigen Verlauf ausgebildet ist. Eine weitere vorteilhafte Ausführungsvariante sieht vor, dass das schräg nach unten Verlaufen durch eine Y-Form ausgebildet ist, wobei ein jeweils unterer Schenkel der Y-Form schräg nach unten verlaufend orientiert ausgebildet ist.

Das Hauptprofil des Hohlprofils ist im Endbereich schräg nach unten orientiert verlaufend, ausgebildet. Zumindest jedoch ein Profilquerschnitt der mindestens 50 %, bevorzugt 60 % des Profilquerschnitts in seiner Dimensionierung des Mittelabschnitts entspricht, ist schräg nach unten orientiert verlaufend, ausgebildet. Der Profilquerschnitt bedeutet die geometrischen Abmessungen des Querschnittes. Insbesondere ist die die Profiltiefe, welche im Einbauzustand in Kraftfahrzeuglängsrichtung orientiert angeordnet ist. Bevorzugt ist diese Tiefe um maximal 30 % reduziert. Dies bedeutet, dass bevorzugt annähernd die gleiche Tiefe in Kraftfahrzeuglängsrichtung ausgebildet ist in jedem Querschnitt des Hohlprofils über dessen Länge. Im Endabschnitt hat der Querträger höchstens eine um 30 % reduzierte Tiefe. Dies bedeutet, im Endabschnitt ist das Hohlprofil entweder gleich oder weniger tief, mithin weniger in seiner Erstreckung in Kraftfahrzeuglängsrichtung ausgebildet, als in einem Mittelabschnitt, jedoch ist die Profiltiefe maximal um 30 % geringer.

Hierdurch werden erfindungsgemäß zwei Vorteile erreicht. Im Falle eines Fahrzeugcrashs, insbesondere eines Offset-Crashs, ist zumindest ein äußeres Ende bzw. ein größerer Teil des Endabschnittes in Bezug auf die Kraftfahrzeugvertikalrichtung unterhalb eines dahinter befindlichen Radmittelpunktes angeordnet. Trifft nunmehr ein anderes Fahrzeug oder ein Gegenstand auf den Querträger auf, so wird dieser in Richtung Fahrzeugrad bewegt unter Deformation von Crashbox oder/oder Längsträger. Zunächst intrudiert dann der Querträger sowie ggf. dahinter befindliche Teile, in das Radhaus und trifft dann bei weiterer Deformation auf das Rad selber auf. Dadurch, dass der Endabschnitt unterhalb des Radmittelpunktes angeordnet ist, wird sichergestellt, dass sich der Querträger hier quasi an dem Rad abstützt. Das Rad in Verbindung mit der Radaufhängung gibt einen zusätzlichen Lastpfad sowie Widerstand gegen weitere Intrusion des Gegenstandes oder kollidierenden Kraftfahrzeuges in Richtung Fahrgastraum. Der Gegenstand oder das andere Kraftfahrzeug wird somit auf die Kraftfahrzeugquerrichtung bezogen zur Seite hin abgeleitet. Es ergibt sich ein zusätzlicher Lastpfad in Kraftfahrzeuglängsrichtung neben dem Lastpfad über die Hauptlängsträger. Somit wird der Querträgerendbereich bei Auftreffen auf einen Gegenstand zunächst an den Radkasten, wiederum dann an das Rad gedrückt. Das Rad wird zunächst über die Radaufhängung abgestützt. Bei einem stärkeren Auftreffen und damit einhergehender Deformation wird das Rad an den in Längsrichtung orientierten Schweller des Kraftfahrzeuges gedrückt, wodurch sich ein weiterer Lastpfad ergibt. Somit ist die Mindestlänge des Endbereiches in Kraftfahrzeugquerrichtung derart ausgebildet, dass bei einer Deformation in Kraftfahrzeuglängsrichtung, also ein nach hinten drücken, der Endbereich sicher auf das Rad auftrifft. Hierzu ist in Querrichtung mindestens die Hälfte eines Rades durch ein Ende des Querträgers überdeckt. Es wird zusätzlich sicher vermieden, dass der Endbereich des Querträgers nicht oberhalb des Rades abgleitet. Dies wäre der Fall, wenn der Querträger in seinen Endabschnitten nicht schräg nach unten orientiert verlaufend ausgebildet ist, da dann die Endabschnitte des Querträgers auf Höhe des Radmittelpunktes oder darüber angeordnet wären. Somit wird auch sicher vermieden, dass beispielsweise ein intrudierendes Fahrzeug bei, auf die Vertikalrichtung bezogen, oberhalb des Rades abgleitendem Querträger entsprechend auf das Rad bzw. das eigene Kraftfahrzeug aufgebockt wird.

Ein zweiter wesentlicher Vorteil, dadurch, dass der Querträger sich, quasi unterhalb des Radmittelpunktes einhakt, ist, dass dadurch sicher ein aufprallender Gegenstand auf die Kraftfahrzeugquerrichtung nach außen hin abgeleitet wird.

Die Crashboxen sind in einem Anbindungsbereich zwischen einem Mittelbereich und den Endbereichen des Querträgers angeordnet. Mithin sind die Crashboxen in einem Bereich, bezogen auf die Längsrichtung des Querträgers zwischen 10 und 90 %, bevorzugt zwischen 20 und 80 %, beziehungsweise auch zwischen 30 und 70 % angeordnet. Der Endbereich des Querträgers beginnt dann von dem Mittelbereich kommend untermittelbar in Längsrichtung des Querträgers nach den Crashboxen und ist nach unten verlaufend angeordnet. Der Endbereich kann jedoch auch, auf die Längsrichtung bezogen, in den Anbindungsbereichen der Crashboxen beginnen.

Das Hohlprofil kann zumindest abschnittsweise in einer bevorzugten Ausführungsvariante mit einem Schließblech gekoppelt sein. Es können auch mehrere Schließbleche angeordnet sein. Besonders bevorzugt ist der Querträger selbst im Querschnitt als Hutprofil ausgebildet. Das Hutprofil weist dann weiterhin bevorzugt nach oben und unten orientiert abstehende Flansche auf. Die Flansche dienen insbesondere auch als Kopplung mit einem Schließblech.

In einer weiteren bevorzugten Ausgestaltungsvariante sind die Endbereiche, bezogen auf die Kraftfahrzeugvertikalrichtung, in ihrer Fläche vergrößert. Dies kann in einer Vergrößerung des Querschnittes bedingt sein. Es können jedoch auch beispielsweise die an dem Schließblech vorhandenen Flansche größer ausgebildet sein. Durch die vergrößerte Fläche wird eine vergrößerte Auftrefffläche auf das Rad bereitgestellt. Hierdurch wiederum ergibt sich eine bessere Abstützung im Crashfall bei Andrücken des Querträgers an das Fahrzeugrad.

Der Querträger ist weiterhin um die Vertikalachse gekrümmt verlaufend ausgebildet. Besonders bevorzugt ist eine Krümmung der Endbereiche stärker ausgebildet in Relation zu einer Krümmung des Mittelbereiches. Hierdurch wird wiederum erreicht, dass der jeweilige Endbereich des Querträgers im Crashfall, mithin bei Deformation in Kraftfahrzeuglängsrichtung, zu einem früheren Zeitpunkt bereits an dem Rad anliegt und somit hier eine weitergehende Abstützung realisiert ist. Alternativ oder ergänzend ist insbesondere der Mittelbereich im Wesentlichen parallel zu einer ZY-Ebene des Kraftfahrzeuges verlaufend ausgebildet. Der jeweilige Endbereich weist einen entsprechenden Winkel zur ZY-Ebene auf. Dieser Winkel beträgt bevorzugt zwischen 1 und 30 Grad, insbesondere zwischen 10 und 20 Grad. Dabei kann der jeweilige Endbereich bespielsweise auch gekrümmt verlaufen.

In einer weiteren bevorzugten Ausgestaltungsvariante umgreifen die Crashboxen die Hutform von hinten, dergestalt, dass ein oberer und ein unterer Teil der Crashbox die Hutform überlappt und an der Rückseite einer Vorderwand bzw. des Flansches an dem Querträger anliegt.

Der Querträger selbst bzw. die Hauptschale des Querträgers selbst, ist als einteiliges Umformbauteil aus einer Stahllegierung hergestellt, insbesondere als Pressumformbauteil. Hierzu kann die Warmumform- und Presshärtetechnologie eingesetzt werden, so dass der Querträger nicht nur durch seine Geometrie, sondern auch durch seinen Werkstoff eine besonders hohe Festigkeit aufweist. Diese kann eine Zugfestigkeit größer 1500 MPa, insbesondere größer 1600 MPa, besonders bevorzugt größer 1700 MPa haben.

Dem Querträger selbst kann ein Hilfsquerträger zugeordnet sein. Der Hilfsquerträger ist dann auf die Vertikalrichtung bezogen, unterhalb des Querträgers angeordnet. Der Hilfsquerträger kann wiederum mit den nach unten orientiert verlaufenden Endabschnitten gekoppelt sein, insbesondere kann er am äußeren Ende angeordnet sein und mit dem Hauptquerträger gekoppelt sein. Auch kann der Hilfsquerträger einstückig und werkstoffeinheitlich mit dem Hauptquerträger ausgebildet sein. Somit wird beispielsweise der Querträger und der Hilfsquerträger aus einer Blechplatine zugeschnitten und umformtechnisch hergestellt.

Weitere Vorteile, Merkmale, Eigenschaften und Aspekte der vorliegenden Erfindung sind Gegenstand der nachfolgenden Beschreibung.
- Figur 1: eine Frontansicht des erfindungsgemäßen Querträgers,
- Figur 2: eine Draufsicht des erfindungsgemäßen Querträgers,
- Figur 3: eine Rückansicht des erfindungsgemäßen Querträgers,
- Figur 4: eine alternative Ausgestaltungsvariante der Figur 3,
- Figur 5: eine alternative Ausgestaltungsvariante des erfindungsgemäßen Querträgers,
- Figur 6: eine Ausgestaltungsvariante der erfindungsgemäßen Stoßfängeranordnung,
- Figur 7: eine Draufsicht auf die erfindungsgemäße Stoßfängeranordnung,
- Figur 8: eine Seitenansicht auf die erfindungsgemäße Stoßfängeranordnung,
- Figur 9: Darstellung entsprechend der Figur 8, ergänzend auf die Vorderseite mit Schließblech,
- Figur 10: eine Ausgestaltungsvariante analog der Figur 6 und
- Figur 11: eine Ausgestaltungsvariante der Stoßfängeranordnung, und
- Figur 12 und 13: ein jeweiliges Crashszenario mit einer erfindungsgemäßen Stoßfängeranordnung und
- Figur 14 und 15: eine analoge Ausgestaltungsvariante zur Stoßfängeranordnung gemäß Figur 6.

In den Figuren werden für ähnliche oder gleiche Bauteile dieselben Bezugszeichen verwendet, auch wenn eine wiederholte Beschreibung aus Vereinfachungsgründen entfällt.

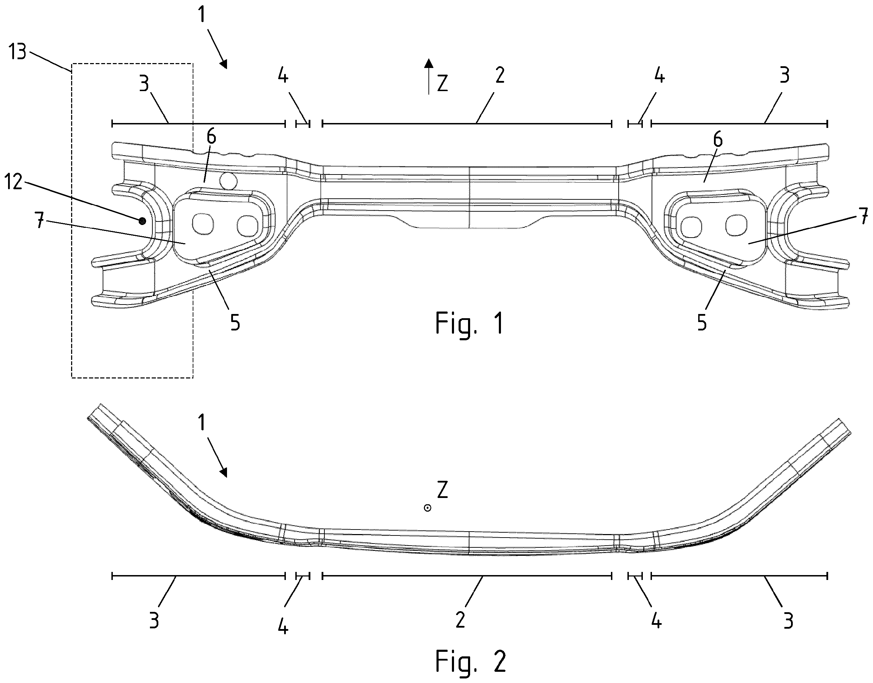

Figuren 1 und 2 zeigen einen erfindungsgemäßen Querträger 1 in Frontansicht und Draufsicht. Der Querträger 1 bzw. die hier dargestellte Hauptschale des Querträgers 1 ist als Pressumformbauteil ausgebildet. Im Querschnitt weist dieser, insbesondere in seinem Mittelbereich 2, ein hutförmiges Profil auf. Zwischen dem Mittelbereich 2 und Endabschnitten 3 sind Anbindungsbereiche 4 für hier noch nicht dargestellte Crashboxen ausgebildet. Die Endabschnitte 3 sind auf die Kraftfahrzeugvertikalrichtung Z bezogen schräg nach unten orientiert verlaufend ausgebildet. Die Endabschnitte 3 selbst sind Y-förmig ausgebildet, wobei ein auf die Vertikalrichtung Z unten angeordneter Schenkel 5 der Y-Form jeweils schräg nach unten orientiert verlaufend ausgebildet ist. In dem Schenkel 5 selbst setzt sich auch die Hutform fort. Zumindest jedoch weist die Hutform hier im Bereich des Schenkels 5 einen Querschnitt auf, der im Wesentlichen 50 % (in seiner Dimensionierung) des Hauptquerschnitts im Mittelbereich 2 entspricht. Ferner ist zwischen dem oberen Schenkel 6 und dem unteren Schenkel 5 ein Napfbereich 7 ausgebildet. Hierdurch ist die Fläche vergrößert, mit welcher die Endabschnitte 3 auf ein dahinter befindliches Rad 13 aus auftreffen würden.

Auf die Bildebene bezogen links dargestellt in gestrichelter Linie ist ein Kraftfahrzeugrad bzw. Rad 13. Der Endbereich bzw. das äußere Ende des Endbereichs des unteren Schenkels 5 liegt dabei auf die Kraftfahrzeugvertikalrichtung Z bezogen unterhalb eines Radmittelpunktes 12. Wird nunmehr durch eine Deformation in Kraftfahrzeuglängsrichtung X der äußere Endbereich deformiert, trifft dieser auf das Rad 13 auf.

Figur 2 als Draufsicht zeigt, dass eine Krümmung um die Kraftfahrzeugvertikalrichtung Z ausgebildet ist. Die Krümmung ist im Mittelbereich gering ausgebildet, in den Endbereichen deutlich stärker ausgebildet. Im Falle eines Kraftfahrzeugcrashes in Kraftfahrzeuglängsrichtung X trifft somit der jeweilige Endabschnitt 3 auf ein in Kraftfahrzeuglängsrichtung X dahinter angeordnetes Rad 13. Hierdurch bedingt wird auch gleichzeitig die Radaufhängung als zusätzliche Abstützung genutzt. Somit wird nicht nur über die Crashbox 8 abgestützt bzw. Energie abgebaut, sondern der Querträger 1 stützt sich auch am Rad 13 ab.

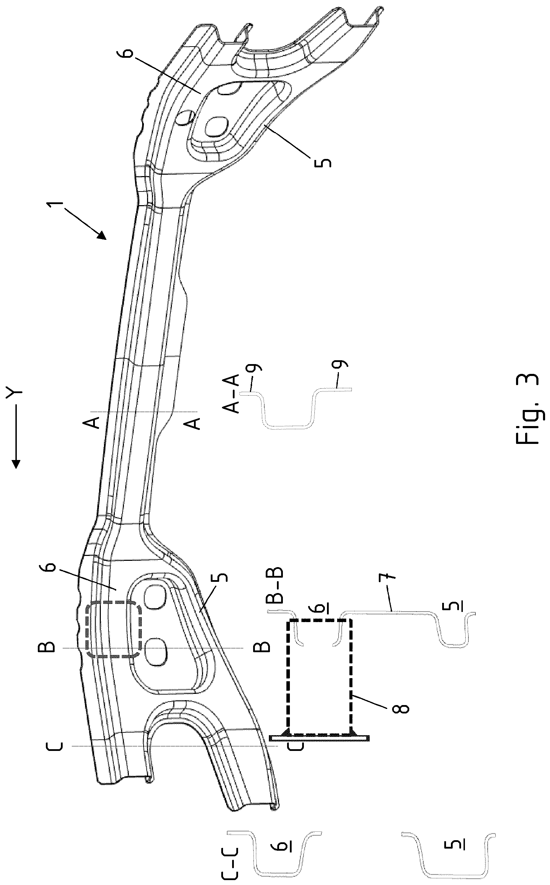

Figur 3 zeigt eine Rückansicht des erfindungsgemäßen Querträgers 1, bzw. der Hauptschale des Querträgers 1, sowie drei Querschnittsansichten. Auf die Kraftfahrzeugquerrichtung Y versetzt ist eine Anbindungsposition gestrichelt dargestellt und in der mittleren Querschnittsansicht ist auch eine Crashbox 6 eingezeichnet. Gemäß der Schnittlinie A-A ist zu erkennen, dass der Mittelbereich 2 im Querschnitt hutförmig ausgebildet ist mit einem nach oben und unten abstehenden Flansch 9. Gemäß B-B ist ein oberer Schenkel 6 sowie ein unterer Schenkel 5 ausgebildet. Der untere Schenkel 5 weist eine Querschnittsgeometrie auf, die mindestens 50 % des Hauptquerschnittes der Hutform im Mittelbereich 2 entspricht. Zwischen oberem Schenkel 6 und unterem Schenkel 5 ist ein Napfboden bzw. Napfbereich 7 ausgebildet, um insbesondere die Querschnittsfläche zu vergrößern. Die äußeren Enden der Schenkel 5, 6 sind in der Querschnittsansicht C-C dargestellt und jeweils hutförmig ausgebildet.

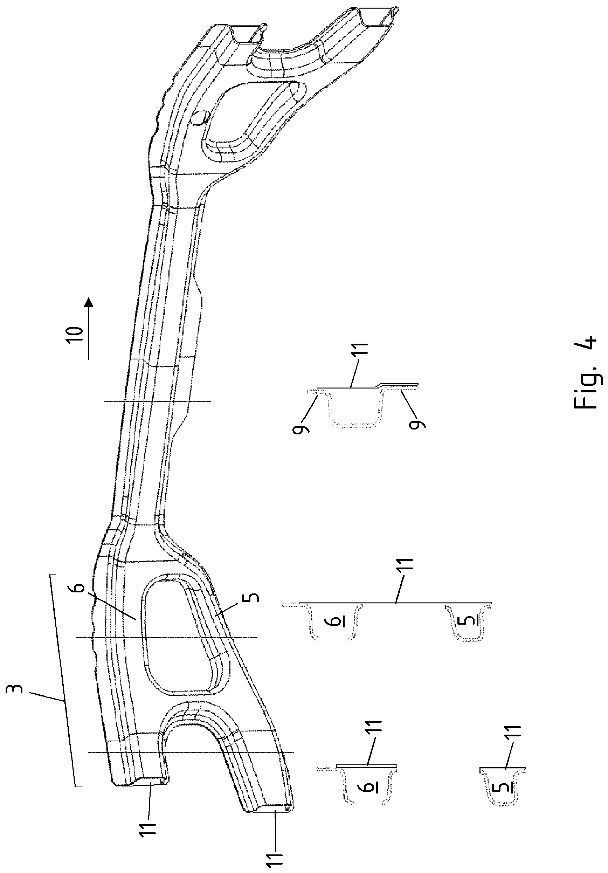

Figur 4 zeigt eine alternative Ausgestaltungsvariante zu Figur 3. Hier ist ein jeweiliges Schließblech bzw. mehrere Schließbleche 11 dargestellt, da das Schließblech in Längsrichtung 10 des Querträgers 1 auch mehrteilig ausgebildet sein kann. Der Napfbereich 7 zwischen oberem und unterem Schenkel 5, 6 ist entfallen, da dieser Bereich insbesondere durch ein Schließblech 11 überdeckt ist. Das Schließblech 11 ist jeweils mit den Flanschen 9 der Hutform gekoppelt. Im Endbereich ist somit die Querschnittsfläche vergrößert, mit welcher ein Hindernis auftritt.

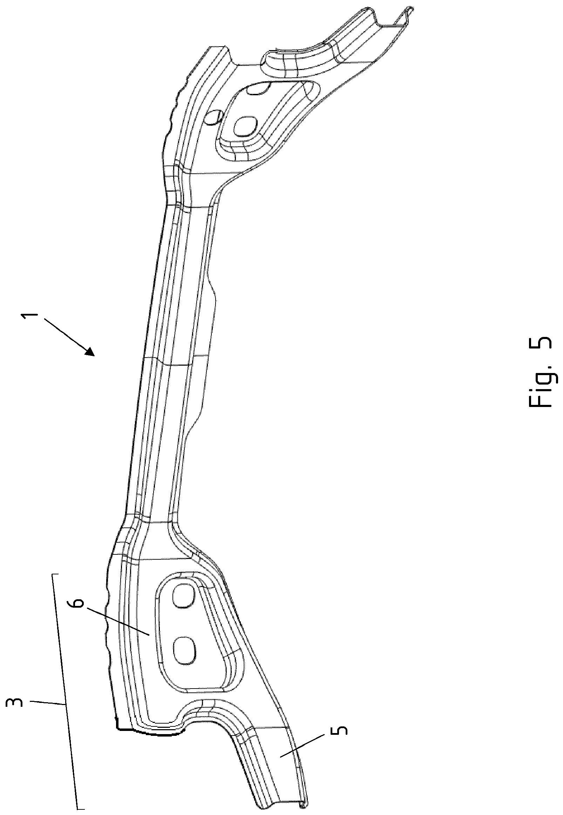

Figur 5 zeigt eine alternative Ausgestaltungsvariante des erfindungsgemäßen Querträgers 1. Hierbei ist nur der untere Schenkel 5 bis in den äußeren Endbereich ausgebildet. Der obere Schenkel 6 der Y-Form ist am Endbereich ausgeschnitten. Hierdurch können beispielsweise weitere Funktionsflächen bereitgestellt werden. Beispielsweise kann hier ein Kühler angeordnet werden, der dann nicht durch den oberen Schenkel 6 überdeckt wird. Eine hinreichende Crashsicherheit ist durch den unteren Schenkel 5 gegeben.

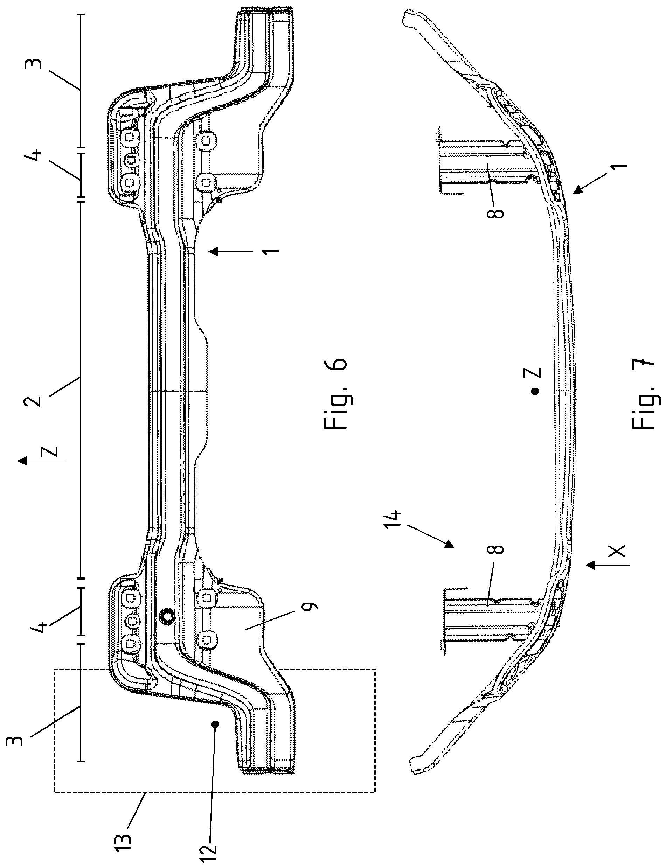

Figuren 6 und 7 zeigen eine zweite Ausgestaltungsvariante einer erfindungsgemäßen Stoßfängeranordnung 14. Hierbei ist der Endbereich auf die Kraftfahrzeugvertikalrichtung Z schräg nach unten orientiert verlaufend ausgebildet. Die schräg nach unten verlaufend ist durch einen S-Schlag 16 bzw. einen S-förmigen Verlauf ausgebildet. Auch hierdurch wird erreicht, dass zumindest ein äußeres Ende auf die Kraftfahrzeugvertikalrichtung Z bezogen unterhalb eines Radmittelpunktes 12 angeordnet ist. Im Falle eines Fahrzeugcrashes wird somit erreicht, dass sich der Endbereich bzw. Endabschnitt 3 unterhalb des Radmittelpunktes 12 einhakt. Zumindest teilweise im Bereich des Endabschnittes 3 und im Bereich des Anbindungsabschnittes ist der auf die Vertikalrichtung bezogene untere Flansch 9 vergrößert ausgebildet. Hierdurch wird die Auftrefffläche für Crashenergie entsprechend vergrößert ausgebildet. Eine bessere Abstützung ist somit gewährleistet. Im Mittelabschnitt ist ein Offset dargestellt, mit welchem der Querträger 1 im Mittelbereich 2 auf die Kraftfahrzeugvertikalrichtung Z bezogen vertikal nach unten versetzt ist. Beispielsweise bei großen Kraftfahrzeugen wie Jeeps, Geländewagen oder SUVs, kann somit eine hinreichende Crasheigenschaft für einen Bumper-to-Bumper-Crash sichergestellt werden.

Figur 7 zeigt die Stoßfängeranordnung in Draufsicht. Auch hier ist zu erkennen, dass auf die Kraftfahrzeugvertikalrichtung Z bezogen eine Krümmung im Mittelbereich 2 gering ausgebildet ist und eine Krümmung in den Endbereichen stärker ausgeprägt ist, so dass in Relation dazu eine Krümmung in den Endbereichen stärker ausgeprägt ist, so dass die Enden der Endabschnitte 3 in Kraftfahrzeuglängsrichtung X näher an ein dahinter befindliches Rad 13 verlagert sind und im Crashfall somit eher auf ein entsprechendes Rad 13 auftreffen.

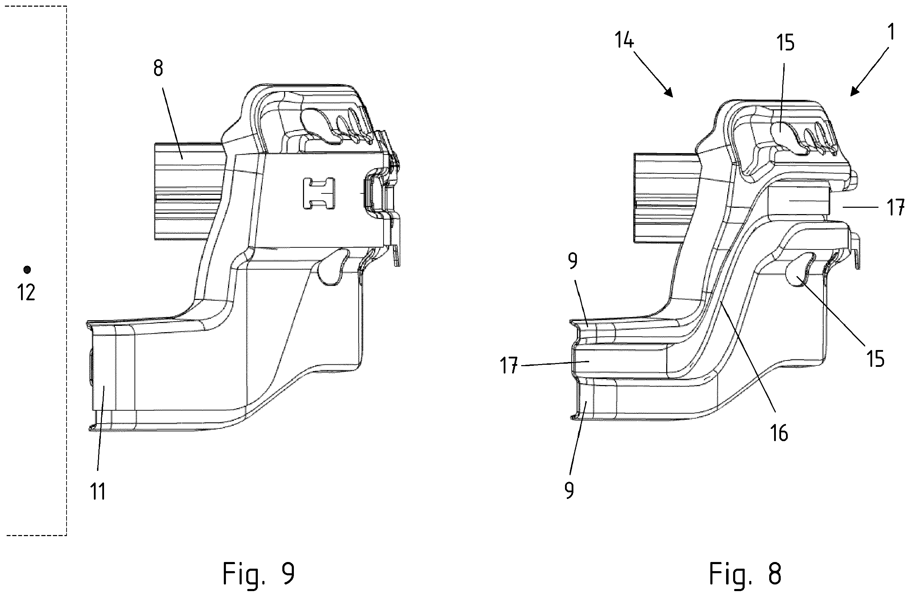

Figur 8 zeigt eine Seitenansicht der erfindungsgemäßen Stoßfängeranordnung 14. Hier zu erkennen ist, dass der Querträger 1 als komplex geformtes Umformbauteil insbesondere durch Pressumformen ausgebildet ist. Der Querträger 1 selbst kann einige Funktionsöffnungen 15 aufweisen, beispielsweise um Abschleppösen, Parksensoren oder ähnliches daran zu befestigen. In seinem Hauptquerschnitt jedoch ist der Querträger 1 hutförmig ausgebildet. Der hutförmige Verlauf erstreckt sich auch über den S-Schlag 16 bis hin ins äußere Ende des Endbereiches. Mithin steht ein oberer Flansch und ein unterer Flansch 9 von der Hutform 17 ab. Der wesentliche Querschnitt der Hutform 17 ändert sich über den Verlauf nur gering und entspricht insbesondere im Endbereich mindestens 50 %, bevorzugt mehr als 60 %, insbesondere mehr als 70 % des Hauptquerschnitts der Hutform 17 im Mittelbereich 2.

Figur 9 zeigt eine Darstellung gemäß Figur 8, wobei hier ergänzend auf die Vorderseite ein Schließblech 11 aufgebracht ist.

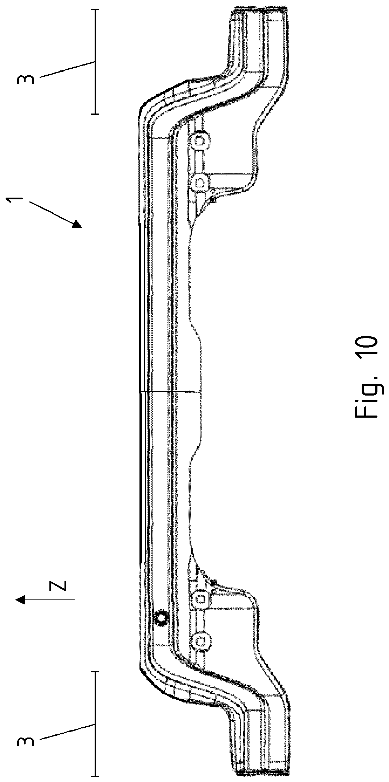

Figur 10 zeigt eine Ausgestaltungsvariante analog zu Figur 6, wobei hier im Mittelbereich 2 der Offset nicht ausgebildet ist. Ein oberer Flansch 9 im Bereich der Crashboxanbindung ist ebenfalls entfallen. Der jeweilige Endbereich ist jedoch mit seinem S-Schlag 16 auf die Kraftfahrzeugvertikalrichtung Z bezogen nach unten schräg orientiert verlaufend ausgebildet.

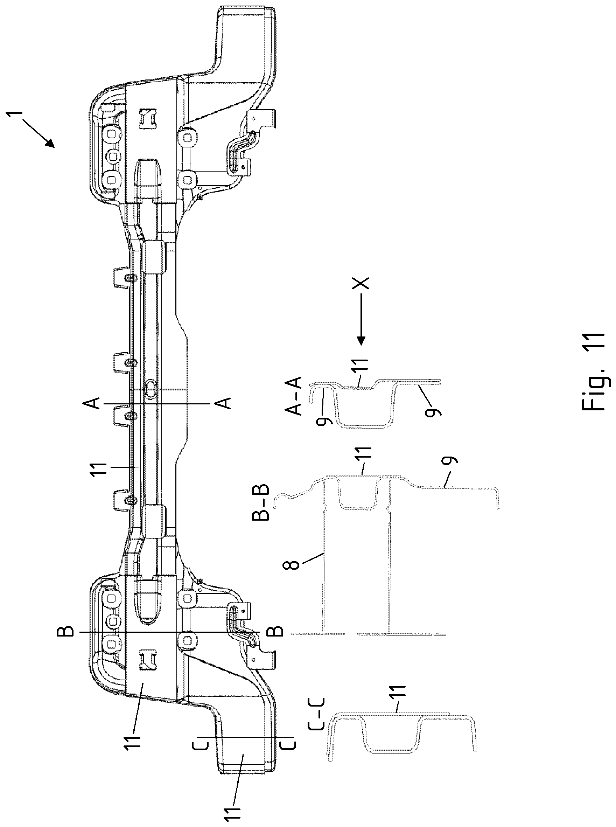

Figur 11 zeigt eine Ausgestaltungsvariante der Stoßfängeranordnung 14 mit drei Schnittansichten. Hier dargestellt ist ein jeweils mehrteiliges Schließblech 11 angeordnet. Ein mittleres Schließblech 11 ist im Mittelbereich 2 bei A-A ausgebildet. Ein weiteres Schließblechpatch ist in einem ersten Teil des Endbereiches angeordnet und dargestellt in der Schnittlinie B-B. Ein drittes Schließblech ist im äußeren Ende des Endabschnitts angeordnet und dargestellt in der Schnittlinie C-C. Das Schließblech 11 im Mittelbereich 2 kann selbst noch eine nach innen verformte Sicke aufweisen. Die Steifigkeit im Mittelbereich 2 gegen Deformation in Kraftfahrzeuglängsrichtung X wird hierdurch nochmals erhöht. Gut zu erkennen ist in der Schnittlinie B-B auch noch, dass der auf die Kraftfahrzeugvertikalrichtung bezogene untere Flansch 9 der Hutform 17 deutlich vergrößert ist, so dass hier eine größere Auftrefffläche vorhanden ist. Die Hutform 17 verläuft dann über den S-förmigen Endbereich und endet im äußeren Ende des Endbereiches, dargestellt in der Schnittlinie C-C. Die Größe des Querschnittsprofils der Hutform 17 ändert sich insgesamt über den Längsverlauf nur gering, so dass über die gesamte Breite des Querträgers 1 eine hinreichende Steifigkeit gegen Verformung in Kraftfahrzeuglängsrichtung X gegeben ist.

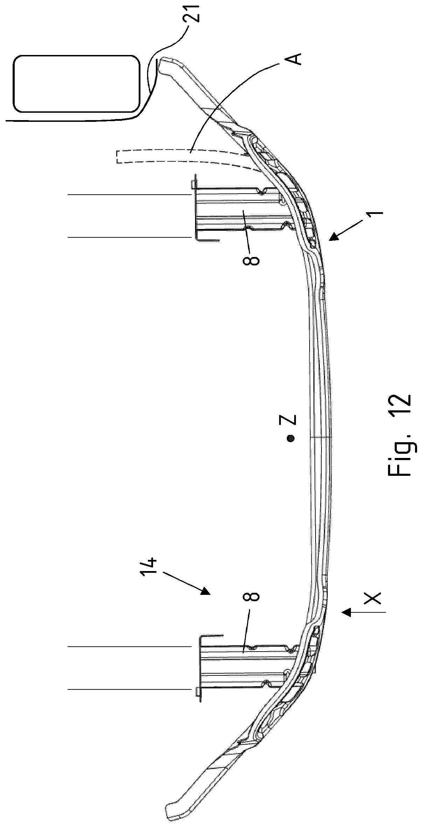

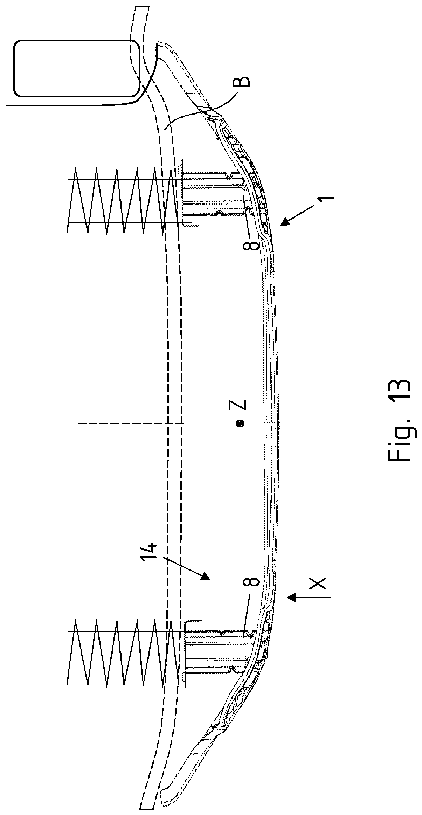

Figur 12 und 13 zeigen ein jeweiliges Crashszenario.

Im Fall A in Figur 12 ist durch unzureichende Aussteifung des Endbereichs durch fehlende Profilierung bzw. zu niedrige Profiltiefe des nach unten gezogenen Arms und durch zu kurz überstehende Endbereiche/fehlende Überdeckung ein Vorbeigleiten an den Rad 13 gegeben. Erfindungsgemäß wird dies vermieden, dadurch, dass mindestens die Hälfte des Rades 13 in Kraftfahrzeugquerrichtung Y überdeckt wird sowie auch eine entsprechende Aussteifung bis ins äußere Ende des Endbereiches aufgrund der Hutform 17 gegeben ist. Der Fall A kann somit bei der erfindungsgemäßen Stoßfängeranordnung 14 nicht auftreten.

Für den in Figur 13 dargestellten Fall B ist der Stoßfängerträger 14 unter Eindrücken der Crashbox 8 und auch eines dahinter befindlichen Längsträgers 18 an das Rad 13 herangedrückt, wodurch sich ein zweiter, zusätzlicher Lastpfad 19 zu dem Hauptlastpfad 20 über das Rad 13 und einen dahinter nicht näher dargestellten in Kraftfahrzeuglängsrichtung X folgenden Schweller erfolgt und neben einem Hauptlastpfad 20 der erfolgt über den Längsträger 18 selber.

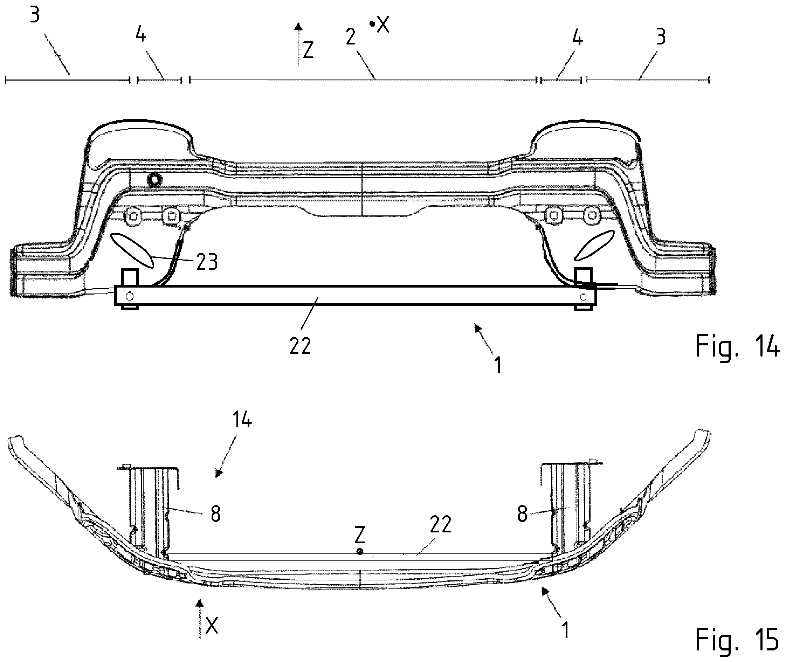

Figuren 14 und 15 zeigen eine analoge Ausgestaltungsvariante zu der Stoßfängeranordnung 14 gemäß Figur 6. Hier ist ein Zusatzquerträger 22 angeordnet. Dieser ist in dem vergrößerten Flanschbereich des S-Schlages ausgebildet. Zusätzlich ist eine Verstärkungssicke 23 angeordnet, um eine weitergehende Steifigkeit zu haben und die Verstärkungssicke 23 ist zwischen dem eigentlichen Hubprofil des Querträgers 1 und dem Zusatzquerträger 22 angeordnet, so dass der Zusatzquerträger 22 im Falle eines Aufpralls nicht einfach wegklappt oder umgebogen wird und hier eine hinreichende Versteifung gegen Verformung gegeben ist. Ein entsprechender Zusatzquerträger 22 kann auch bei der Ausgestaltungsvariante gemäß Figur 1 ff. angeordnet sein, wird hier jedoch nicht näher beschrieben.

### Bezugszeichen:

- 1 -: Querträger
- 2 -: Mittelbereich
- 3 -: Endabschnitt
- 4 -: Anbindungsbereich
- 5 -: unterer Schenkel
- 6 -: oberer Schenkel
- 7 -: Napfbereich
- 8 -: Crashbox
- 9 -: Flansch
- 10 -: Längsrichtung
- 11-: Schließblech
- 12 -: Radmittelpunkt
- 13 -: Rad
- 14 -: Stoßfängeranordnung
- 15 -: Funktionsöffnung
- 16 -: S-Schlag
- 17 -: Hutform
- 18 -: Längsträger
- 19 -: Lastpfad
- 20 -: Hauptlastpfad
- 21-: Radhaus
- 22 -: Zusatzquerträger
- 23 -: Verstärkungssicke

- X -: Kraftfahrzeuglängsrichtung
- Y -: Kraftfahrzeugquerrichtung
- Z -: Kraftfahrzeugvertikalrichtung

## Patentansprüche

1. Kraftfahrzeug mit einer Stoßfängeranordnung (14), aufweisend einen Querträger (1), welcher mittels Crashboxen (8) an das Kraftfahrzeug gekoppelt ist, wobei der Querträger (1) als einseitig offenes Hohlprofil ausgebildet ist, wobei der Querträger (1) einstückig und werkstoffeinheitlich mit Endabschnitten (3) ausgebildet ist, insbesondere als Blechumformbauteil, wobei
der Querträger (1) in seinen Endabschnitten (3) auf die Vertikalrichtung (Z) bezogen nach schräg unten orientiert verlaufend ausgebildet ist **dadurch gekennzeichnet dass** in Kraftfahrzeugquerrichtung (Y) mindestens die Hälfte eines Rades (13) durch ein Ende des Querträgers (1) überdeckt ist, dergestalt, dass sich im Crashfall ein zusätzlicher Lastpfad (19) in Kraftfahrzeuglängsrichtung (X) ergibt, wobei die Öffnung des Hohlprofils in Kraftfahrzeuglängsrichtung (X) orientiert von dem Kraftfahrzeug weg zeigt,.

2. Kraftfahrzeug nach Anspruch 1, **dadurch gekennzeichnet, dass** die Crashboxen (8) in einem Anbindungsbereich (4) zwischen einem Mittelbereich (2) und den Endbereichen angeordnet sind.

3. Kraftfahrzeug nach Anspruch 1 oder 2, **dadurch gekennzeichnet, dass** die Endbereiche (3) von dem Mittelbereich (2) kommend unmittelbar vor, auf Breite oder nach der Crashbox (8) nach unten verlaufend angeordnet sind.

4. Kraftfahrzeug nach einem der vorangehenden Ansprüche, **dadurch gekennzeichnet, dass** das Hohlprofil abschnittsweise mit einem Schließblech (11) gekoppelt ist.

5. Kraftfahrzeug nach einem der vorangehenden Ansprüche, **dadurch gekennzeichnet, dass** der Endbereich (3) S-förmig (16) verlaufend nach unten verlaufend ausgebildet ist.

6. Kraftfahrzeug nach einem der vorangehenden Ansprüche, **dadurch gekennzeichnet, dass** der Endbereich (3) Y-förmig ausgebildet ist, wobei ein Schenkel (5) der Y-Form nach unten verlaufend ausgebildet ist.

7. Kraftfahrzeug nach einem der vorangehenden Ansprüche, **dadurch gekennzeichnet, dass** der Querträger (1) nach oben und/oder unten abstehend Flansche (9) aufweist, wobei in dem Endbereich (3) zumindest teilweise der Flansch (9) vergrößert ausgebildet ist.

8. Kraftfahrzeug nach einem der vorangehenden Ansprüche, **dadurch gekennzeichnet, dass** der Querträger (1) um die Vertikalachse (Z) gekrümmt verlaufend ausgebildet ist, wobei eine Krümmung der Endbereiche (3) stärker ausgebildet ist, in Relation zu einer Krümmung des Mittelbereiches (2).

9. Kraftfahrzeug nach einem der vorangehenden Ansprüche, **dadurch gekennzeichnet, dass** der Querträger (1) im Querschnitt hutförmig ausgebildet ist, wobei ein Querschnitt der Hutform (17) bis in die Endabschnitte (3) verlaufend ausgebildet ist.

10. Kraftfahrzeug nach einem der vorangehenden Ansprüche, **dadurch gekennzeichnet, dass** die Crashboxen (8) die Hutform (17) von hinten umgreifen, dergestalt, dass ein oberer und ein unterer Teil der Crashbox (8) die Hutform (17) überlappt und insbesondere an einer Rückseite einer Vorderwand anliegt.

11. Kraftfahrzeug nach einem der vorangehenden Ansprüche, **dadurch gekennzeichnet, dass** ein außenseitiger Abschnitt des Endbereiches (3) auf die Kraftfahrzeugvertikalrichtung (Z) bezogen unterhalb eines dahinter befindlichen Radmittelpunktes (12) angeordnet ist.

12. Kraftfahrzeug nach einem der vorangehenden Ansprüche, **dadurch gekennzeichnet, dass** der Querträger (1) als einteiliges Umformbauteil aus einer Stahllegierung hergestellt ist, insbesondere durch Warmumformen und Presshärten mit einer Zugfestigkeit Rm größer 1300 MPa.

## Claims

1. Motor vehicle with a bumper assembly (14), comprising a cross member (1), which is coupled to the motor vehicle by means of crash boxes (8), wherein the cross member (1) is configured as a hollow profile open on one side, wherein the cross member (1) is formed in one piece and with material uniformity with end sections (3), in particular as a sheet metal formed component, wherein the cross member (1) is configured in its end sections (3) so as to extend obliquely downwards in relation to the vertical direction (z), **characterized in that** in the transverse direction (Y) of the motor vehicle at least half a wheel (13) is covered by one end of the cross member (1) in such a way that in the event of a crash an additional load path 19) results in longitudinal direction (X) of the motor vehicle, wherein the opening of the hollow profile points away from the motor vehicle oriented in the longitudinal direction (X) of the motor vehicle.

2. Motor vehicle according to claim 1, **characterized in that** the crash boxes (8) are arranged in a connecting region (4) between a central region (2) and the end sections.

3. Motor vehicle according to claim 1 or 2, **characterized in that** the end sections (3) coming from the central region (2) are arranged extending downwards immediately before, at the width of or after the crash box (8).

4. Motor vehicle according to any one of the preceding claims, **characterized in that** the hollow profile is coupled in some sections to a striking plate (11).

5. Motor vehicle according to any one of the preceding claims, **characterized in that** the end section (3) is configured to be S-shaped (16) extending downwards.

6. Motor vehicle according to any one of the preceding claims, **characterized in that** the end section (3) is Y-shaped, wherein one leg (5) of the Y shape extends downwards.

7. Motor vehicle according to any one of the preceding claims, **characterized in that** the cross member (1) has flanges (9) projecting upwards and/or downwards, wherein the flange (9) is at least partially enlarged in the end section (3).

8. Motor vehicle according to any one of the preceding claims, **characterized in that** the cross member (1) is curved around the vertical axis (Z), wherein a curvature of the end sections (3) is more pronounced in relation to a curvature of the central region (2).

9. Motor vehicle according to any one of the preceding claims, **characterized in that** the cross member (1) is hat-shaped in cross-section, wherein a cross-section of the hat shape (17) extends into the end sections (3).

10. Motor vehicle according to any one of the preceding claims, **characterized in that** the crash boxes (8) engage around the hat shape (17) from behind such that an upper and a lower part of the crash box (8) overlap the hat shape (17) and in particular bear against a rear side of a front wall.

11. Motor vehicle according to any one of the preceding claims, **characterized in that** an outer section of the end section (3) is arranged below a wheel centre (12) located behind it in relation to the vertical direction (Z) of the motor vehicle.

12. Motor vehicle according to any one of the preceding claims, **characterized in that** the cross member (1) is produced as a one-piece shaped component from a steel alloy, in particular by hot forming and press hardening with a tensile strength Rm greater than 1300 MPa.

## Revendications

1. Véhicule automobile avec un agencement de pare-chocs (14), présentant une traverse (1) qui est couplée au véhicule automobile au moyen d'absorbeurs de chocs (8), dans lequel la traverse (1) est réalisée comme un profil creux ouvert d'un côté, dans lequel la traverse (1) est réalisée d'un seul tenant et en matériau homogène avec des sections d'extrémité (3), en particulier comme composant de formage de tôle, dans lequel la traverse (1) est réalisée en s'étendant orientée en biais vers le bas dans ses sections d'extrémité (3) par rapport au sens vertical (z), **caractérisé en ce que** dans le sens transversal du véhicule automobile (Y), au moins la moitié d'une roue (13) est recouverte par une extrémité de la traverse (1) de telle manière qu'il résulte en cas de choc un trajet de charge (19) supplémentaire dans le sens longitudinal du véhicule automobile (X), dans lequel l'ouverture du profil creux est tournée orientée à l'écart du véhicule automobile dans le sens longitudinal du véhicule automobile (X).

2. Véhicule automobile selon la revendication 1, **caractérisé en ce que** les absorbeurs de chocs (8) sont agencés dans une zone de liaison (4) entre une zone centrale (2) et les zones d'extrémité.

3. Véhicule automobile selon la revendication 1 ou 2, **caractérisé en ce que** les zones d'extrémité (3) venant de la zone centrale (2) sont agencées en s'étendant vers le bas directement avant, sur la largeur ou après l'absorbeur de chocs (8).

4. Véhicule automobile selon l'une quelconque des revendications précédentes, **caractérisé en ce que** le profil creux est couplé par sections à une tôle de fermeture (11).

5. Véhicule automobile selon l'une quelconque des revendications précédentes, **caractérisé en ce que** la zone d'extrémité (3) est réalisée en forme de S (16) en s'étendant vers le bas.

6. Véhicule automobile selon l'une quelconque des revendications précédentes, **caractérisé en ce que** la zone d'extrémité (3) est réalisée en forme de Y, dans lequel une branche (5) de la forme en Y est réalisée en s'étendant vers le bas.

7. Véhicule automobile selon l'une quelconque des revendications précédentes, **caractérisé en ce que** la traverse (2) présente des brides (9) en saillie vers le haut et/ou le bas, dans lequel la bride (9) est réalisée au moins partiellement agrandie dans la zone d'extrémité (3).

8. Véhicule automobile selon l'une quelconque des revendications précédentes, **caractérisé en ce que** la traverse (1) est réalisée en s'étendant courbée autour de l'axe vertical (Z), dans lequel une courbure des zones d'extrémité (3) est réalisée de manière plus prononcée, par rapport à une courbure de la zone centrale (2).

9. Véhicule automobile selon l'une quelconque des revendications précédentes, **caractérisé en ce que** la traverse (1) est réalisée en section transversale en forme de chapeau, dans lequel une section transversale de la forme de chapeau (17) est réalisée en s'étendant jusque dans les sections d'extrémité (3).

10. Véhicule automobile selon l'une quelconque des revendications précédentes, **caractérisé en ce que** les absorbeurs de chocs (8) entourent la forme de chapeau (17) depuis l'arrière de telle manière qu'une partie supérieure et une partie inférieure de l'absorbeur de chocs (8) recouvrent la forme de chapeau (17) et reposent en particulier contre un côté arrière d'une paroi arrière.

11. Véhicule automobile selon l'une quelconque des revendications précédentes, **caractérisé en ce qu'**une section côté extérieur de la zone d'extrémité (3) est agencée en dessous d'un point central de roue (12) se trouvant derrière par rapport au sens vertical du véhicule automobile (Z).

12. Véhicule automobile selon l'une quelconque des revendications précédentes, **caractérisé en ce que** la traverse (1) est fabriquée comme composant de formage d'un seul tenant en un alliage d'acier, en particulier par formage à chaud et durcissement par pressage avec une résistance à la traction Rm supérieure à 1300 MPa.
